## Europäisches Patentamt
## European Patent Office
## Office européen des brevets

(19)

(11) Veröffentlichungsnummer : **0 104 325**
**B1**

(12) # EUROPÄISCHE PATENTSCHRIFT

(45) Veröffentlichungstag der Patentschrift :
26.03.86

(51) Int. Cl.⁴ : **B 23 K 33/00**

(21) Anmeldenummer : **83106137.9**

(22) Anmeldetag : **23.06.83**

(54) Verfahren zum Schweissen innen plattierter zylindrischer Werkstücke.

(30) Priorität : 06.07.82 DE 3225126

(43) Veröffentlichungstag der Anmeldung :
04.04.84 Patentblatt 84/14

(45) Bekanntmachung des Hinweises auf die Patenterteilung : 26.03.86 Patentblatt 86/13

(84) Benannte Vertragsstaaten :
AT BE CH DE FR GB IT LI LU NL SE

(56) Entgegenhaltungen :
DE-A- 1 565 441
US-A- 1 977 678
US-A- 2 083 234

(73) Patentinhaber : M.A.N. MASCHINENFABRIK AUGS-BURG-NÜRNBERG Aktiengesellschaft
Bahnhofstrasse 66
D-4200 Oberhausen 11 (DE)

(72) Erfinder : Zimmermann, Horst
Genterstrasse 111 .
D-4200 Oberhausen 14 (DE)
Erfinder : Million, Karl, Dr.-Ing.
Beerenstrasse 40
D-4200 Oberhausen 11 (DE)

Jouve, 18, rue St-Denis, 75001 Paris, France

**Beschreibung**

Die Erfindung betrifft ein Verfahren zum Schweißen innen plattierter zylindrischer Werkstücke, insbesondere von Teilen der Hauptkühlmittelleitungen von Kernkraftwerken, durch Engspaltschweißen mit abschmelzender oder nichtabschmelzender Elektrode.

Es ist bereits bekannt, plattierte Bleche so zu verschweißen, daß eine V-förmige Außennaht vorbereitet wurde, die den größten Teil des Grundmaterials der beiden zusammenzufügenden zylindrischen Werkstücke oder Rohre durchdrang und bei einem Schweißen ausschließlich von außen erstreckte sich diese V-förmige Nut auch noch in den Bereich des Plattierungsmaterials. Bei Verhältnissen, die ein Verschweißen auch von innen erlaubten, wurde dabei die Plattierungsschicht breitflächig im Nutbereich abgetragen und mit dem Plattierungsmaterial nach Einfügung einer Zwischenschicht durch Schweißen wieder aufgefüllt.

Nachteilig bei diesem bekannten Verfahren, welches bisher praktisch vorwiegend zur Verbindung von plattierten Werkstücken beim Bau der Primär-Kreisläufe von Kernkraftwerken verwendet wurde, ist der hohe Materialaufwand für die Ausfüllung der Fugen zwischen den Werkstücken sowie die dadurch bedingte lange Bearbeitungszeit.

Nachteilig bei dem bekannten Verfahren ist es außerdem, daß

die Mechanisierung des Schweißens wegen der variablen Raupenzahl pro Lage erschwert ist,

der Grobkornanteil in der Wärmeeinflußzone wegen der Flankenneigung verhältnismäßig groß ist,

bei Montagenähten an ruhenden Bauteilen zunächst von außen und danach erst von innen geschweißt werden muß.

Die Ausbildung der breiten Nuten sowohl im Plattierungsbereich als auch im Bereich des Grundmaterials ist ebenfalls weiterhin aufwendig und zeitraubend. Zu berücksichtigen ist dabei, daß z. B. bei der Möglichkeit einer Verschweißung auch von innen die Breite der Nut im Bereich des Plattierungsmaterials ca. 40 mm beträgt und eine ähnliche Breite am Außenrand der Nut im Grundmaterial vorliegt.

Es ist daher Aufgabe der Erfindung, ein Schweißverfahren von insbesondere Komponenten für die Primär-Kreisläufe von Kernkraftwerken zu finden, bei welchem die vorgenannten Nachteile nicht mehr vorliegen und welches insbesondere eine einfache und sichere Mechanisierung des Schweißvorganges erreichbar macht und damit die Durchführung von fehlerfreien, qualitativ überlegenen Schweißnähten ermöglicht.

Diese Aufgabe wird bei dem eingangs genannten Verfahren erfindungsgemäß dadurch gelöst, daß eine engstmögliche asymmetrische Doppel-U-Naht mit durchschweißbarem Steg geometrisch so angeordnet wird, daß von der schwer zugänglichen Innenseite der Werkstücke nur eine durch übereinander gelegte Einzelraupen erzielbare auf ein Minimum reduzierte Schweißgutmenge einzubringen ist, und der restliche Querschnitt des Grundwerkstoffes von der äußeren leicht zugänglichen Seite der Werkstücke, unabhängig vom Innenschweißen, verschweißt wird.

Für Montagenähte an ruhenden Werkstücken, das heißt für Nähte auf der Baustelle kann vorteilhaft weiterhin das WIG-Engspaltschweißen eingesetzt werden, wobei die Schweißanlage in das bereits montierte noch offene Werkstück eingebaut und schweißbereit zentriert wird, so daß nach Anmontieren eines Anschlußstückes das Schweißen von innen vorgenommen werden kann, ohne daß Eingriffe im Werkstückinneren notwendig wären.

Bei Werkstattnähten an rotierenden Werkstücken mit ruhenden Schweißköpfen, das heißt innerhalb der fertigenden Betriebe kann das erfindungsgemäße Schweißverfahren vorteilhaft alternativ derart ausgeführt werden, daß das UP-Dünndraht-Engspaltschweißen eingesetzt wird, wobei die Lage des durchschweißbaren Steges so gewählt wird, daß zunächst der gesamte Grundwerkstoffbereich von außen und erst danach der Plattierungsbereich von innen geschweißt wird.

Im folgenden wird ein Ausführungsbeispiel der Erfindung anhand von Zeichnungen näher erläutert. Es zeigen:

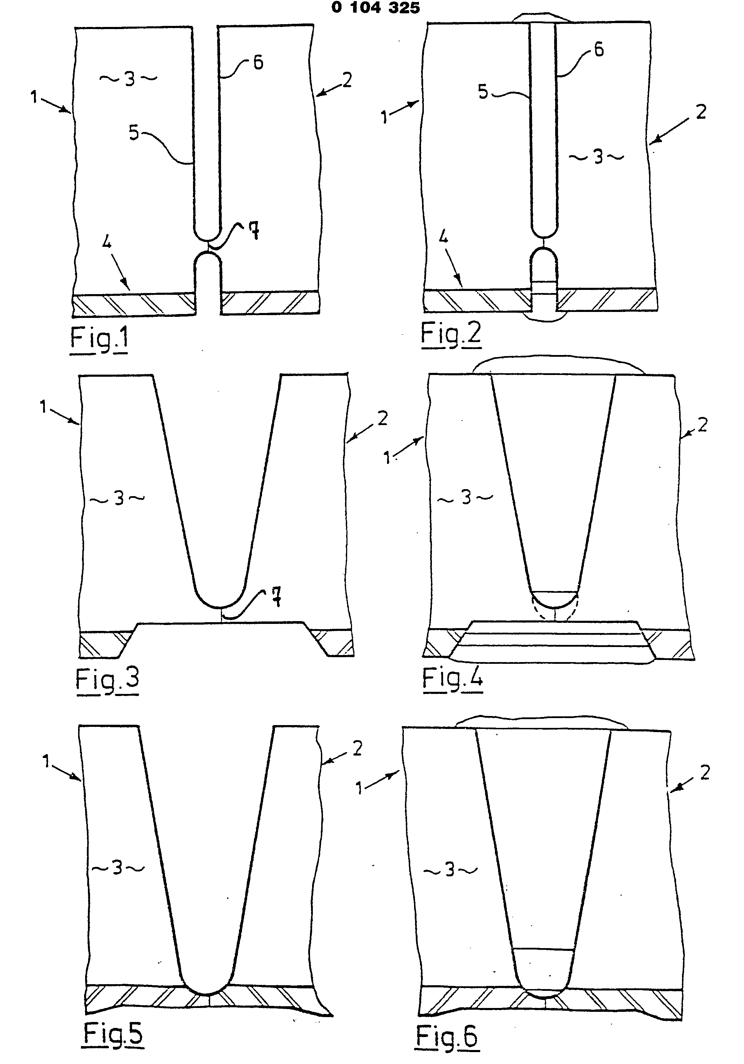

Figur 1 schematisch im Schnitt die vorbereitete Fuge zwischen zwei zu verbindenden Werkstücken oder Rohren vor Beginn des Schweißvorganges,

Figur 2 die Darstellung nach Figur 1 nach erfolgter Schweißung

Figur 3 schematisch im Schnitt die vorbereitete Fuge gemäß dem Stand der Technik für Werkstattnähte,

Figur 4 die Darstellung gemäß Figur 3 nach erfolgter Schweißung,

Figur 5 schematisch im Schnitt die vorbereitet Fuge gemäß dem Stand der Technik für Montagenähte und

Figur 6 die Darstellung gemäß Figur 5 nach erfolgter Schweißung.

Das erfindungsgemäße Verfahren eignet sich insbesondere zur Verbindung von Rohren und anderen Werkstücken mit Innenplattierung, die z. B. beim Bau von Primär-Kreisläufen und Druckbehältern von Kernkraftwerken Verwendung finden. Die Anwendung beschränkt sich aber nicht nur auf die Verbindung von Behälterschüssen miteinander, auf die Verbindung von Rohrstutzen mit Rohren oder von Rohren untereinander, sondern das erfindungsgemäße Verfahren kann bei allen Verschweißungen Anwendung finden, bei denen innen plattierte Werkstücke miteinander verbunden werden.

Die Verwendung des erfindungsgemäßen Verfahrens ist dabei nicht nur auf die Herstellung von Werkstattnähten, d. h. das Verschweißen innerhalb von Werkstätten beschränkt, sondern es können auch Montagenähte angebracht werden, d. h. das erfindungsgemäße Verfahren eignet sich auch zum Verschweißen von Werkstücken auf Baustellen.

Gemäß den Figuren wird das eine Werkstück mit 1 und das andere, damit zu verschweißende mit 2 bezeichnet. Der Grundwerkstoff, in der Regel ein ferritischer Stahl ist dabei mit 3 bezeichnet und die Plattierung, in der Regel ein austenitischer Stahl ist mit 4 bezeichnet. Diese Materialien liegen für den Fachmann selbstverständlich bei beiden miteinander zu verbindenden Werkstücken in gleicher Anordnung und Schichtdicke vor.

Die Flanken des Schweißspaltes bzw. die Fuge werden entgegen der herkömmlichen V-förmigen Ausbildung derart bearbeitet, daß sie sowohl im inneren, plattierten als auch im äußeren Bereich annähernd parallel verlaufen. Die Flanke der Fuge des Werkstücks 1 ist dabei mit 5 und die des Werkstücks 2 mit 6 bezeichnet. Zwischen den Fugenflanken ist ein Abstandssteg 7 angeordnet, der zur Positionierung der Werkstücke vor dem Verschweißen und zur Einstellung der Übergangszone der inneren und der äußeren Schweißung dient. Der Abstandssteg 7 ist im Fall von Montagenähten entgegen der herkömmlichen Ausbildung im Abstand von der Plattierung 4 angeordnet, so daß die innere Fuge zuerst mit Grundmaterial durch Schweißen aufgefüllt werden muß, wobei das innere Nahtvolumen mindestens so groß gewählt wird, daß ein Anreißen oder Durchbrechen dieses zuerst eingebrachten Schweißvolumens unter dem Eigengewicht oder anderer Montagebelastungen nicht eintreten kann. Die Ausbildung der Flanken 5 und 6 ist in der Regel im Stegbereich derart, daß sie in einem Viertelkreis zu den aneinander anliegenden Stegflanken verlaufen. Zusammen bilden also die sich gegenüberliegenden Flanken zur Ausbildung des Steges 7 einen Halbkreis.

Die vorstehend beschriebenen Schweißverfahren sind vom Prinzip her unter dem Namen WIG-Engspaltschweißen sowie UP-Dünndraht-Engspaltschweißen bekannt. Bei Montagenähten an ruhenden Werkstücken wird dabei das WIG-Engspaltschweißen eingesetzt und die Schweißanlage in das bereits montierte, noch offene Werkstück eingebaut. Nach dem Zentrieren der beiden zu verbindenden Werkstücke für das Schweißen wird das Anschlußstück anmontiert und das Schweißen kann von innen vorgenommen werden, ohne daß Eingriffe im Werkstück inneren notwendig wären.

Beim Herstellen von Werkstattnähten an rotierenden Werkstücken mit ruhenden Schweißköpfen wird vorwiegend das UP-Dünndraht-Engspaltschweißen derart eingesetzt, daß die Lage des durchschweißbaren, vorstehend genannten Steges so gewählt wird, daß zunächst der gesamte Grundwerkstoffbereich von außen und erst danach der Plattierungsbereich von innen geschweißt wird.

Da das erfindungsgemäße Verfahren qualitativ besonders hochwertige Schweißnähte schafft, einfach ist und einen geringen Schweißmaterialverbrauch bedingt, kann von einer idealen Lösung der anstehenden Probleme gesprochen werden.

## Patentansprüche

1. Verfahren zum Schweißen innen plattierter zylindrischer Werkstücke, insbesondere von Teilen der Hauptkühlmittelleitungen von Kernkraftwerken, durch Engspaltschweißen mit abschmelzender oder nichtabschmelzender Elektrode, dadurch gekennzeichnet, daß eine engstmögliche asymmetrische Doppel-U-Naht mit durchschweißbarem Steg geometrisch so angeordnet wird, daß von der schwer zugänglichen Innenseite der Werkstücke nur eine durch übereinander gelegte Einzelraupen erzielbare auf ein Minimum reduzierte Schweißgutmenge einzubringen ist, und der restliche Querschnitt des Grundwerkstoffes von der äußeren leicht zugänglichen Seite der Werkstücke, unabhängig vom Innenschweißen, verschweißt wird.

2. Verfahren nach Anspruch 1 für Montagenähte an ruhenden Werkstücken, dadurch gekennzeichnet, daß das WIG-Engspaltschweißen eingesetzt wird und die Schweißanlage in das bereits montierte noch offene Werkstück eingebaut und schweißbereit zentriert wird, so daß nach Anmontieren eines Anschlußstückes das Schweißen von innen vorgenommen werden kann, ohne daß Eingriffe im Werkstückinneren notwendig wären.

3. Verfahren nach Anspruch 1 für Werkstattnähte an rotierenden Werkstücken mit ruhenden Schweißköpfen, dadurch gekennzeichnet, daß das UP-Dünndraht-Engspaltschweißen eingesetzt wird, wobei die Lage des durchschweißbaren Steges so gewählt wird, daß zunächst der gesamte Grundstoffbereich von außen und erst danach der Plattierungsbereich von innen geschweißt wird.

## Claims

1. Method of welding internally clad cylindrical workpieces, in particular components of main coolant pipelines of nuclear power stations, by means of narrow-gap welding with fusible or non-fusible electrodes, characterised in that a narrowest possible asymmetric double-U seam with fusible land is geometrically so arranged that from the poorly accessible interior of the workpieces, only an amount of welding materials, reduced to a minimum, is applied by means of superimposed individual beads, and the remaining cross section of the base material is welded from the outer, easily accessible side of the workpiece, independent of the internal welding.

2. Method according to Claim 1 for assembly welding of round workpieces, characterised in that TIG (tungsten inert gas) narrow-gap welding technique is applied, and the welding equipment is built into the already assembled, still open workpiece, and is centred ready for welding, so that after dismantling a connecting piece, the welding operation can be carried out from the inside, without the necessity for any access to the workpiece interior.

3. Method according to Claim 1 for workshop seam welding on revolving workpieces with stationary welding heads, characterised in that the submerged-arc welding technique is used, whereby the position of the fusible land is selected such that the whole base material region is first welded from the outside, and only thereafter, is the cladding region welded from the inside.

**Revendications**

1. Procédé pour le soudage d'une pièce d'œuvre cylindrique revêtue intérieurement d'un placage, notamment de parties des canalisations principales d'agents de refroidissement de centrales nucléaires, par soudage à fente étroite avec une électrode fusible ou non fusible, procédé caractérisé en ce qu'un cordon de soudure double en forme de U avec un voile susceptible de traverser la soudure est géométriquement disposé de façon qu'à partir du côté interne difficilement accessible de la pièce d'œuvre, il suffit d'introduire une quantité réduite à un minimum d'un produit de soudage susceptible d'être obtenue par des passes individuelles déposées les unes sur les autres, et que la section transversale résiduelle du matériau de base est soudée, indépendamment de la soudure interne, à partir du côté externe facilement accessible de la pièce d'œuvre.

2. Procédé selon la revendication 1 pour des cordons de soudure rapportés au montage sur des pièces d'œuvre au repos, caractérisé en ce qu'on met en œuvre le soudage WIG à fente étroite et que le dispositif de soudage est installé et centré avant le soudage sur la pièce d'œuvre préalablement montée et encore ouverte, de sorte qu'après montage d'une pièce de raccordement, on peut procéder au soudage à partir de l'intérieur sans que des interventions à l'intérieur de la pièce d'œuvre soient nécessaires.

3. Procédé selon la revendication 1 pour des cordons de soudure mis en place à l'atelier sur des pièces d'œuvre en rotation avec des têtes de soudage au repos, procédé caractérisé en ce qu'on met en œuvre le soudage UP à fil mince et à fente étroite, la position du voile susceptible de traverser la soudure est choisie de façon que tout d'abord l'ensemble du matériau de base est soudé à partir de l'extérieur et que ce n'est qu'ensuite que la zone de placage est soudée à partir de l'intérieur.

0 104 325

Fig.1

Fig.2

Fig.3

Fig.4

Fig.5

Fig.6